(19) Europäisches Patentamt
European Patent Office
Office européen des brevets

(11) Numéro de publication : **0 288 331 B1**

# (12) FASCICULE DE BREVET EUROPEEN

(45) Date de publication du fascicule du brevet : **29.01.92 Bulletin 92/05**

(51) Int. Cl.$^5$ : **C08G 69/44**

(21) Numéro de dépôt : **88400364.1**

(22) Date de dépôt : **17.02.88**

## (54) Polyétherthioéther-ester-amides - leur procédé de fabrication.

(30) Priorité : **26.02.87 FR 8702568**

(43) Date de publication de la demande : **26.10.88 Bulletin 88/43**

(45) Mention de la délivrance du brevet : **29.01.92 Bulletin 92/05**

(84) Etats contractants désignés : **AT BE DE FR GB IT NL SE**

(56) Documents cités : **US-A- 4 501 879**

(73) Titulaire : **ATOCHEM**
**4 & 8, Cours Michelet La Défense 10**
**F-92800 Puteaux (FR)**

(72) Inventeur : **Cuzin, Daniel**
**9, Allée de l'Abbé Emile Bois**
**F-78560 Port Marly (FR)**
Inventeur : **Judas, Didier**
**11, Rue Beudant**
**F-75017 Paris (FR)**

(74) Mandataire : **Foiret, Claude et al**
**ATOCHEM 4 & 8 Cours Michelet La Défense 10**
**F-92800 Puteaux (FR)**

EP 0 288 331 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des produits nouveaux : des polyétherthioéther-ester-amides de formule :

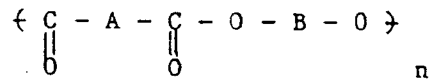

dans laquelle A désigne une séquence polyamide et -B- une structure contenant une fonction thio.

Ces polyétherthioéther-ester-amides sont obtenus par réaction d'un polyamide dicarboxylique avec un thioétherglycol ou un polyétherthioéther diol.

La présence de la fonction thio dans le polymère obtenu conduit à un polyamide possédant une bonne tenue aux solvants contrairement aux polyamides connus obtenus par réaction d'un polyamide dicarboxylique sur un simple polyoxyalkylèneglycol hydroxylé, comme décrit dans les brevets français 2 401 947 et 2 273 021. Ces polyamides connus présentent l'inconvénient de gonfler dans les solvants et cela d'autant plus que la proportion de séquences polyéthers est importante dans le polymère.

De façon plus précise les produits selon l'invention répondent à la formule générale :

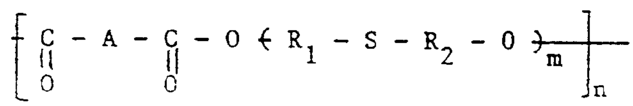

dans laquelle :

$R_1$ et $R_2$ identiques ou différents, représentent un radical alcoyle , linéaire ou ramifié, contenant de 2 à 98 atomes de carbone

m est compris entre 1 et 50

n représente une répétition d'un nombre d'unités récurrentes constituant la chaine macromoléculaire. Habituellement n n'est pas inférieur à 1 avec 75 comme maximum.

La proportion pondérale du groupement

$$- O (R_1 - S - R_2 - O )_m$$

par rapport au groupement total

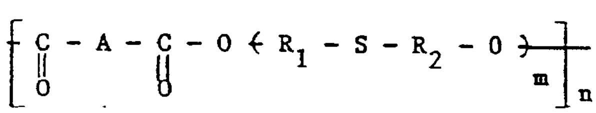

peut varier de 1 à 95 % et de préférence de 4 à 87 %.

La séquence polyamide dicarboxylique

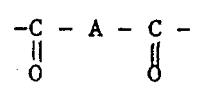

est connue en elle-même. Elle correspond habituellement au groupement :

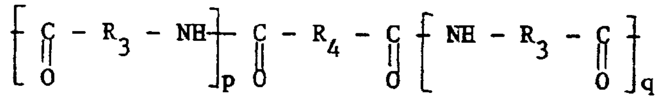

dans lequel

$R_3$ peut être :

soit une chaine hydrocarbonée constituant un lactame et/ou un aminoacide dont le nombre d'atomes de carbone est de préférence compris entre 4 et 14

soit la structure

$$-R_5-\underset{\underset{O}{\|}}{C}-NH-R_6-$$

dans laquelle

$R_5$ et $R_5$ représentent respectivement les restes hydrocarbonés d'un diacide et d'une diamine

$R_4$ représente le reste du diacide organique utilisé comme limitateur de chaine. Ce peut être par exemple un groupement aliphatique, cycloaliphatique ou aromatique

p et q, identiques ou différents, l'un d'eux pouvant être nul, représentent une répétition d'un nombre d'unités récurrentes constituant la chaine macromoléculaire de la séquence polyamide dicarboxylique.

La masse moléculaire moyenne de la séquence polyamide dicarboxylique est comprise entre 300 et 15000 et mieux entre 600 et 5000, p + q étant compris entre 1 et 100 et mieux entre 2 et 40.

De façon générale les polyétherthioéther-ester-amides selon l'invention peuvent encore se formuler :

$$\left[\left(\underset{\underset{O}{\|}}{C}-R_3-NH\right)_p\underset{\underset{O}{\|}}{C}-R_4-\underset{\underset{O}{\|}}{C}\left(NH-R_3-\underset{\underset{O}{\|}}{C}\right)_q O\left(R_1-S-R_2\right)_m\right]_n$$

$R_1$, $R_2$, $R_3$, $R_4$, p, q, m et n étant définis comme précédemment.

Les produits selon l'invention sont obtenus par réaction d'un polyamide dicarboxylique dont les fonctions acides sont situées aux extrémités de la chaine avec un thioétherglycol ou un polyétherthioéther diol. La réaction peut se schématiser comme suit :

$$n\ HOOC-A-COOH+n\ HO\left[R_1-S-R_2-O\right]_m H\longrightarrow$$

$$\left[\underset{\underset{O}{\|}}{C}-A-\underset{\underset{O}{\|}}{C}-O\left(R_1-S-R_2-O\right)_m\right]_n$$

les symboles A, $R_1$, $R_2$, m, n étant définis comme précédemment.

Le reste du thioétherglycol ou du polyétherthioéther diol, représentant le groupement

$$-O\left(R_1-S-R_2-O\right)_m$$

peut se trouver en proportion de 1 à 95 % en poids et mieux de 4 à 87 %, dans la macromolécule de polyamide obtenu.

La réaction de polycondensation entre le polyamide dicarboxylique et le thioétherglycol ou le polyétherthioéther diol, habituellement en proportions en poids respectives comprises entre 99 et 5 % pour 1 à 95 %, et, de préférence comprises entre 96 et 13 % pour 4 à 87 %, s'effectue par mélange à l'état fondu des réactifs en présence de catalyseur. De façon usuelle la condensation s'effectue sous agitation à une température comprise entre 100 et 350°C, et de préférence entre 180 et 300°C, dans un temps de 10 minutes à 15 heures selon la nature et la masse de chacun des réactifs. La réaction peut être conduite à pression sensiblement atmosphérique en milieu inerte ou sous vide de l'ordre de 6 à 666 Pa.

Pour que la réaction de polycondensation s'effectue dans les conditions les plus favorables, il est recommandé de faire réagir les réactifs en respectant sensiblement la stoechiométrie entre les groupements carboxyliques du polyamide et les groupements hydroxyles du thioétherglycol ou du polyétherthioéther diol.

Les catalyseurs recommandés pour la préparation de ces polyétherthioéther-ester-amides sont des tétraalcoxydes métalliques qui répondent à la formule générale $M(OQ)_4$ dans laquelle M représente le titane, le zirconium ou l'hafnium. Dans une même molécule les groupements Q, identiques ou différents, désignent des radicaux alcoyles linéaires ou ramifiés possédant de 1 à 24 atomes de carbone et mieux de 1 à 8. Comme exemples de catalyseur on peut citer $Zr(OC_2H_5)_4$, $Zr(O\text{-}isoC_3H_7)_4$, $Zr(OC_4H_9)_4$, $Zr(OC_5H_{11})_4$, $Zr(OC_6H_{13})_4$, $Hf(OC_2H_5)_4$, $Hf(OC_4H_9)_4$, $Hf(O\text{-}isoC_3H_7)_4$, $Ti(OC_4H_9)_4$. Il est employé, seul ou en mélange, en proportion pondérale convenable d'environ 0,01 à 5 % de l'ensemble du milieu réactionnel.

Les polyamides dicarboxyliques entrant dans la fabrication des produits de l'invention sont connus en eux-mêmes. Ils sont obtenus selon les méthodes classiques de préparation de tels polyamides comme par exemple par polycondensation d'un lactame et/ou d'un amino-acide ou d'un diacide et d'une diamine. Ces polycondensations sont réalisées en présence d'un diacide organique dont les fonctions acides sont fixées de préférence à chacune des extrémités de la molécule. Ces diacides se fixent pendant la polycondensation comme constituants de la chaine macromoléculaire des polyamides et agissent comme limitateur de chaine ce qui permet d'obtenir des polyamides alpha omega dicarboxyliques. Selon l'importance de l'excès de diacide organique dans la polycondensation, il est possible de régler la longueur de la chaine macromoléculaire, et par conséquent le poids moléculaire moyen, du polyamide.

Les diacides carboxyliques utilisés dans la réaction de synthèse du polyamide pour permettre la fixation d'un groupement carboxylique à chacune des extrémités de la chaine polyamide, en ayant le rôle de limitateur de chaine sont notamment : les diacides alcanedioïques comme par exemple les acides succinique, adipique, subérique, azélaïque, sébacique, undécanoïque, dodécanoïque, ou encore des diacides cycloaliphatiques ou aromatiques tels que les acides téréphtalique, isophtalique ou cyclohexanedicarboxylique.

Les lactames et amino-acides utilisés dans la fabrication des polyamides dicarboxyliques possèdent une chaine hydrocarbonée dont le nombre d'atomes de carbone est de préférence compris entre 4 et 14. Ils sont habituellement choisis parmi : le butyrolactame, le caprolactame, l'oenantholactame, le décalactame, l'undécanolactame, le dodécanolactame, l'acide 6-amino hexanoïque, l'acide 10-amino décanoïque, l'acide 11-aminoundécanoïque, l'acide 12-aminododécanoïque.

Parmi les polyamides résultant de la polycondensation d'un diacide avec une diamine on peut citer les nylons 6-6, 6-9, 6-10 et 6-12 obtenus à partir d'hexaméthylène diamine et d'acide adipique, azélaïque, sébacique et 1-12 dodécanoïque ou encore le nylon 9-6 obtenu à partir de la nonaméthylène diamine et d'acide adipique.

Les polyamides dicarboxyliques entrant dans la fabrication des produits de l'invention possèdent des masses moléculaires moyennes pouvant varier dans un large intervalle. Ces masses moléculaires moyennes sont de préférence comprises entre 300 et 15 000 et mieux 600 et 5 000.

Les polyétherthioéther diols entrant dans la fabrication des produits de l'invention sont connus en eux-mêmes. Ils sont obtenus par condensation avec élimination d'eau d'un thioétherglycol ou d'un mélange de thioétherglycols selon la réaction :

$$m\ HO - R_1 - S - R_2 - OH \longrightarrow HO\left[R_1 - S - R_2 - O\right]_m H + (m-1)H_2O$$

Comme déjà indiqué $R_1$ et $R_2$, identiques ou différents, représentent un radical alcoyle contenant de 2 à 98 atomes de carbone. Leur disposition donnée sur la formule schématisée de réaction n'est pas impérative ; elle doit tenir compte des différents modes de condensation du ou des thioétherglycols. C'est ainsi que l'on peut avoir indifféremment dans la chaine des enchainements tête à tête, tête à queue ou queue à queue. En raison d'une réactivité plus importante de la fonction hydroxy on utilise de préférence des thioétherglycols dont l'atome de soufre occupe dans la chaine une position béta par rapport aux deux groupements fonctionnels hydroxylés. Ainsi $R_1$ et $R_2$ peuvent être représentés par la structure

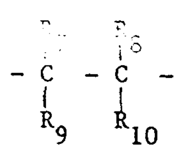

dans laquelle $R_7$, $R_8$, $R_9$, $R_{10}$, identiques ou différents, représentent H ou un radical alcoyle contenant de 1 à 24 atomes de carbone.

Les condensations des thioétherglycols ont entre autre, été décrites par WOODWARD dans Journal of Polymer Science. Vol. 41 (1959) pages 219-223 et 225-230, ou encore dans le brevet des Etats Unis d'Amérique n° 3 312 743. Parmi les thioétherglycols suceptibles d'être condensés on peut citer par exemple : le thiodiglycol, le béta méthylthiodiglycol, le béta éthylthiodiglycol, le béta-béta' diméthylthiodiglycol, le béta-béta' diéthyl thiodiglycol.

Les thioétherglycols ou les polyétherthioéther diols entrant dans la fabrication des produits de l'invention possèdent des masses moléculaires pouvant varier dans un large intervalle. Ces masses moléculaires sont

de préférence comprises entre 122 et 6 000 et mieux entre 200 et 4 000.

Les exemples suivants illustrent l'invention de façon non limitative.

Dans ces exemples :

. la viscosité inhérente de chaque polycondensat a été mesurée dans le métacrésol à 20°C, 0,5 g. de produit pour 100 g. de solvant. Elle est exprimée en $dlg^{-1}$,

. la température de fusion du polycondensat a été déterminée d'après l'analyse thermique différentielle,

. la tenue à l'huile ASTM N° 3 pendant 7 jours à 121°C, en mesurant les variations de poids, exprimées en pour cent, d'éprouvettes plongées dans ce milieu.

## EXEMPLE 1

Dans un réacteur de 250 $cm^3$ on introduit 35,36 g. d'un polyamide 12 dicarboxylique d'un poids moléculaire moyen de 2 080 préparé au préalable par polycondensation du dodécanolactame en présence d'acide adipique. On ajoute ensuite 13,43 g. d'un polyéthertioéther diol d'un poids moléculaire moyen de 790, préparé au préalable par polycondensation d'un mélange de thiodiglycol et de béta méthylthiodiglycol dans un rapport molaire 70/30 et 0,48 g. de tétrabutylorthozirconate.

Après avoir mis sous atomosphère inerte le milieu réactionnel, on chauffe jusqu'à ce que la température ait atteint 200°C. On fait alors le vide à l'intérieur du réacteur en maintenant une agitation vigoureuse à partir du moment où se produit la fusion des constituants. La réaction est ainsi poursuivie pendant 30 minutes à 220°C sous une pression de 27 Pa, puis en restant sous cette même pression, on élève alors progressivement la température du milieu réactionnel jusqu'à 240°C en 20 minutes. On poursuit le chauffage à 240°C pendant 1 heure.

Au fur et à mesure que la viscosité augmente la vitesse d'agitation doit être réduite.

Le polyétherthioéther-ester-amide obtenu possède une viscosité inhérente de 1,12 $dlg^{-1}$. Sa température de fusion est de 169°C.

Sa formule correspond à :

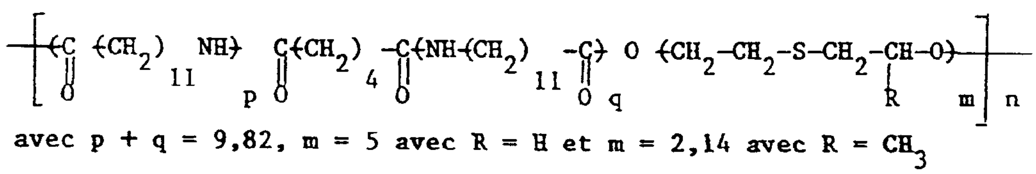

avec $p + q = 9,82$, $m = 5$ avec $R = H$ et $m = 2,14$ avec $R = CH_3$

## EXEMPLE 2

Suivant un mode opératoire analogue à l'exemple 1, on fait réagir 24,8 g. d'un polyamide 12 dicarboxylique résultant de la polycondensation du dodécanolactame en présence d'acide adipique d'un poids moléculaire moyen de 800, avec 24,49 g. du polyétherthioéther diol utilisé dans l'exemple 1 en présence de 0,25 g. de tétrabutylorthozirconate pendant 30 minutes à 220°C sous une pression de 27 Pa ; puis après l'élévation progressive de la température du milieu réactionnel jusqu'à 240°C en 20 minutes la réaction est poursuivie pendant 4 heures à 240°C.

Le polyétherthioéther-ester-amide préparé dans ces conditions présente les caractéristiques suivantes :

– viscosité inhérente = 0,86 $dlg^{-1}$

– température de fusion = 144°C

Sa formule correspond à :

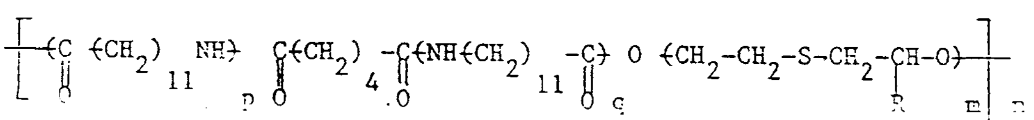

avec $p + q = 3,32$ et $m = 5$ avec $R = H$ et $m = 2,14$ avec $R = CH_3$

## EXEMPLE 3

Suivant le mode opératoire de l'exemple 1 on fait réagir 24,96 g. du polyamide 12 dicarboxylique utilisé dans ce même exemple avec 25,44 g. d'un polyétherthioéther diol d'un poids moléculaire moyen de 2 120 préparé au préalable par polycondensation d'un mélange de thiodiglycol et de béta méthylthiodiglycol dans un

rapport molaire 70/30, en présence de 0,5 g. de tétrabutylorthozirconate.

La durée de réaction à 240°C sous un vide poussé est de 90 minutes.

Le point de fusion du polymère obtenu est de 168°C. Sa viscosité inhérente est de 0,83 $dlg^{-1}$.

Sa formule correspond à :

$$\left[ \left( \underset{\underset{O}{\|}}{C}-(CH_2)_{11}-NH \right)_p \underset{\underset{O}{\|}}{C}-(CH_2)_4-\underset{\underset{O}{\|}}{C}\left( NH-(CH_2)_{11}-\underset{\underset{O}{\|}}{C} \right)_q O \left( CH_2-CH_2-S-CH_2-\underset{\underset{R}{|}}{CH}-O \right)_m \right]_n$$

avec $p + q = 9,82$, $m = 13,60$ avec $R = H$ et $m = 5,83$ avec $R = CH_3$

EXEMPLE 4

Suivant le mode opératoire de l'exemple 1, on fait réagir 18,7 g. d'un polyamide 12 dicarboxylique préparé au préalable par polycondensation du dodécanolactame en présence d'acide adipique, d'un poids moléculaire moyen de 850 avec 31,24 g. d'un polythiodiglycol d'un poids moléculaire moyen de 1 420 en présence de 0,49 g. de tétrabutylorthozirconate.

Après 30 minutes à 220°C sous une pression de 27 Pa, la réaction est poursuivie pendant 2 heures à 240°C.

La viscosité inhérente du polycondensat obtenu dans ces conditions est 0,93 $dlg^{-1}$. Son point de fusion est de 146°C.

Sa formule correspond à :

$$\left[ \left( \underset{\underset{O}{\|}}{C}-(CH_2)_{11}-NH \right)_p \underset{\underset{O}{\|}}{C}-(CH_2)_4-\underset{\underset{O}{\|}}{C}\left( NH-(CH_2)_{11}-\underset{\underset{O}{\|}}{C} \right)_q O \left( CH_2-CH_2-S-CH_2-CH_2-O \right)_m \right]_n$$

avec $p + q = 3,57$ et $m = 13,48$

EXEMPLE 5

Suivant le mode opératoire de l'exemple 1, on fait réagir 28,98 g. d'un polyamide 12 dicarboxylique d'un poids moléculaire moyen de 2 070 préparé auparavant par polycondensation du dodécanolactame en présence d'acide adipique, avec 19,88 g. du polythiodiglycol utilisé dans l'exemple 4, en présence de 0,67 g. de tétrabutylorthozirconate.

Après 30 minutes à 220°C sous une pression de 27 Pa, la réaction est poursuivie pendant 150 minutes à 240°C. Le polymère ainsi obtenu présente un pic de fusion à 168°C. Sa viscosité inhérente est de 1,14 $dlg^{-1}$.

Sa formule correspond à :

$$\left[ \left( \underset{\underset{O}{\|}}{C}-(CH_2)_{11}-NH \right)_p \underset{\underset{O}{\|}}{C}-(CH_2)_4-\underset{\underset{O}{\|}}{C}\left( NH-(CH_2)_{11}-\underset{\underset{O}{\|}}{C} \right)_q O \left( CH_2-CH_2-S-CH_2-CH_2-O \right)_m \right]_n$$

avec $p + q = 9,77$ et $m = 13,48$

Tenue à l'huile ASTM N°3 pendant 7 jours à 121°C des polyétherthioéther-ester-amides obtenus

Afin d'évaluer cette propriété les différents polyétherthioéther-ester-amides préparés selon les modes opératoires décrits dans les exemples 1 à 5 ont été broyés, séchés et moulés par compression

- dimension des plaques moulées : 100 x 100 x 2 mm.
- température du moule : 200°C
- pression et durée de maintien : 10 tonnes pendant 10 minutes.

Après démoulage et refroidissement des plaques obtenues, des haltères, 5 pour chaque produit, de 50 mm. de longueur ont été découpées et immergées pendant 7 jours à 121°C dans l'huile ASTM N°3.

A titre de comparaison le même essai a été effectué avec des haltères, moulées et découpées dans les mêmes conditions, de deux polyéther-ester-amides PEEA 1 et PEEA 2 dont la préparation est décrite dans le

brevet français n° 2 273 021.

. PEEA 1 résulte de la polycondensation de 67 parties en poids d'un polyamide 12 dicarboxylique, d'un poids moléculaire moyen de 2 000, obtenu à partir de dodécanolactame et d'acide adipique, avec 33 parties en poids d'un polyoxytétraméthylèneglycol d'un poids moléculaire moyen de 1 000. Le polyéther-ester-amide obtenu présente une viscosité inhérente de 1,67 $dlg^{-1}$.

. PEEA 2 résulte de la polycondensation de 30 parties en poids d'un polyamide 12 dicarboxylique, d'un poids moléculaire moyen de 850, obtenu à partir de dodécanolactame et d'acide adipique, avec 70 parties en poids d'un polyoxytétraméthylèneglycol d'un poids moléculaire moyen de 2 000. Le polyéther-ester-amide obtenu présente une viscosité inhérente de 1,84 $dlg^{-1}$.

La reprise en poids après 7 jours à 121°C, dans l'huile ASTM N° 3 des polyétherthioéther-ester-amides des exemples 1 à 5 et des polyéther-ester-amides PEEA 1 et PEEA 2 est donnée dans le tableau suivant.

| | Polyéther-ester-amide | | Polyétherthioéther-ester-amide | | | | |
|---|---|---|---|---|---|---|---|
| | PEEA 1 | PEEA 2 | Exemple 1 | Exemple 2 | Exemple 3 | Exemple 4 | Exemple 5 |
| Reprise en poids % | 15 | 93 | 4,2 | 8 | 4,5 | 1,6 | 4,1 |

## Revendications

1. Polyétherthioéther-ester amides de formule:

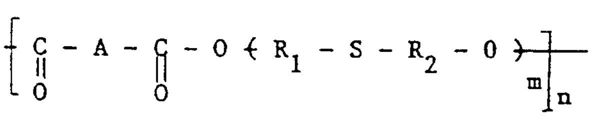

dans laquelle :

A représente une séquence polyamide

$R_1$ et $R_2$ ,identiques ou différents, représentent un radical alcoyle , linéaire ou ramifié, contenant de 2 à 98 atomes de carbone

m est compris entre 1 et 50

n représente un répétition d'un nombre d'unités récurrentes constituant la chaine macromoléculaire.

2. Polyétherthioéther-ester amides selon la revendication 1 caractérisés en ce que $R_1$ et $R_2$ sont représentés par la structure

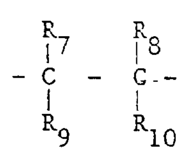

dans laquelle $R_7$, $R_8$, $R_9$, $R_{10}$, identiques ou différents, représentent H ou un radical alcoyle contenant de 1 à 24 atomes de carbone.

3. Polyétherthioéther-ester-amides selon l'une des revendications 1 ou 2 caractérisés en ce que n est un nombre compris entre 1 et 75.

4. Polyétherthioéther-ester-amides selon l'une des revendications 1 ou 3 caractérisés en ce que la proportion pondérale du groupement

$$-O\left(R_1-S-R_2-O\right)_m$$

représente 1 à 95 % du groupement total

$$\left[\underset{\underset{O}{\|}}{C}-A-\underset{\underset{O}{\|}}{C}-O\left(R_1-S-R_2-O\right)\right]_m$$

5. Polyétherthioéther-ester-amides selon l'une des revendications 1 à 4 caractérisés en ce que la séquence polyamide dicarboxylique

$$-\underset{\underset{O}{\|}}{C}-A-\underset{\underset{O}{\|}}{C}-$$

correspond à la formule

$$\left[\underset{\underset{O}{\|}}{C}-R_3-NH\right]_p\underset{\underset{O}{\|}}{C}-R_4-\underset{\underset{O}{\|}}{C}\left[NH-R_3-\underset{\underset{O}{\|}}{C}\right]_q$$

dans laquelle

$R_3$ peut être soit une chaine hydrocarbonée constituant un lactame et/ou un aminoacide soit la structure

$$-R_5-\underset{\underset{O}{\|}}{C}-NH-R_6-$$

dans laquelle $R_5$ et $R_5$ représentent respectivement les restes hydrocarbonés d'un diacide et d'une diamine

$R_4$ représente le reste d'un diacide organique

p et q, identiques ou différents, l'un d'eux pouvant être nul, représentent une répétition d'un nombre d'unités récurrentes constituant la chaine macromoléculaire de la séquence polyamide dicarboxylique.

6. Polyétherthioéther-ester amides selon la revendication 5 caractérisés en ce que la chaine hydrocarbonée de $R_3$ contient de 4 à 14 atomes de carbone.

7. Polyétherthioéther-ester amides selon l'une des revendications 5 ou 6 caractérisés en ce que $R_4$ est un groupe aliphatique, cycloaliphatique ou aromatique.

8. Polyétherthioéther-ester amides selon l'une des revendications 5 à 7 caractérisés en ce que la masse moléculaire moyenne de la séquence polyamide dicarboxylique est comprise entre 300 et 15000, p + q étant compris entre 1 et 100.

9. Procédé de fabrication des polyétherthioéther-ester-amides des revendications 1 à 8 consistant à faire réagir un polyamide dicarboxylique, dont les fonctions acides sont situées aux extrémités de la chaine, avec un diol, caractérisé en ce que le diol est un thioétherglycol ou un polyétherthioéther diol de formule :

$$HO\left[R_1-S-R_2-O\right]_m H$$

dans laquelle $R_1$, $R_2$, m sont tels que définis dans la revendication 1 ou 2.

10. Procédé selon la revendication 9 caractérisés en ce que l'on fait réagir en poids 99 à 5 % en poids de polyamide dicarboxylique avec 1 à 95 % de thioétherglycol ou de polyétherthioéther diol.

11. Procédé selon l'une des revendications 9 ou 10 caractérisé en ce que l'on fait réagir les réactifs en respectant sensiblement la stoechiométrie entre les groupements carboxyliques du polyamide et les groupements hydroxyles du thioétherglycol ou du polyétherthioéther diol.

12. Procédé selon l'une des revendications 9 à 11 caractérisé en ce que la polycondensation s'effectue par mélange à l'état fondu des réactifs en présence de catalyseur.

13. Procédé selon l'une des revendications 9 à 12 caractérisé en ce que le catalyseur est de formule $M(OQ)_4$ dans laquelle :

M représente le titane, le zirconium ou l'hafnium

et Q un radical alcoyle linéaire ou ramifié possédant de 1 à 24 atomes de carbone.

## Patentansprüche

1. Polyetherthioether-esteramide der Formel:

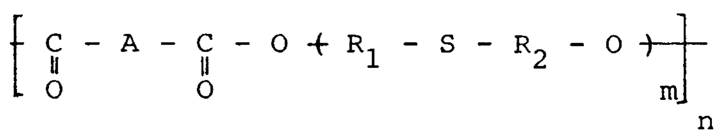

in der:

A eine Polyamidsequenz bedeutet,

$R_1$ und $R_2$, gleich oder verschieden, einen geradkettigen oder verzweigten Alkylrest mit 2 bis 98 Kohlenstoffatomen bedeuten,

m zwischen 1 und 50 ist,

n eine Wiederholung einer Anzahl wiederkehrender die makromolekulare Kette bildende Einheiten bedeutet.

2. Polyetherthioether-esteramide nach Anspruch 1, dadurch gekennzeichnet, daß $R_1$ und $R_2$ die Struktur

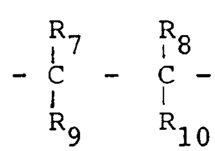

haben, in der $R_7$, $R_8$, $R_9$ und $R_{10}$, gleich oder verschieden, ein Wasserstoff oder einen Alkylrest, mit 1 bis 24 Kohlenstoffatomen, bedeuten.

3. Polyetherthioether-esteramide nach einem der Ansprüche 1 oder 2, dadurch gekennzeichnet, daß n eine Zahl zwischen 1 und 75 ist.

4. Polyetherthioether-esteramide nach einem der Ansprüche 1 oder 3, dadurch gekennzeichnet, daß das Gewichtverhältnis der Gruppierung

$$-O\left(R_1-S-R_2-O\right)_m$$

1 bis 95% der Gesamtgruppierung

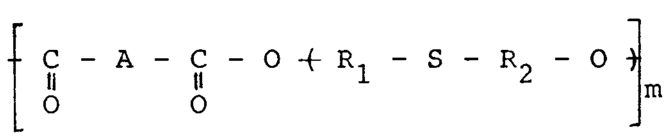

ausmacht.

5. Polyetherthioether-esteramide nach einem der Ansprüche 1 bis 4, dadurch gekennzeichnet, daß die Dicarboxypolyamidsequenz

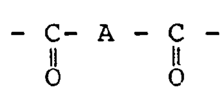

der Formel

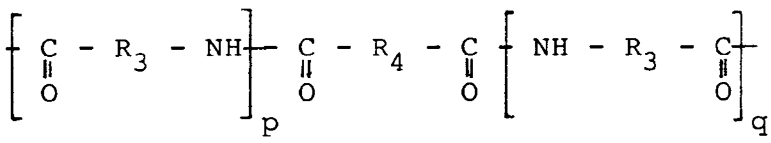

entspricht, in der

$R_5$ entweder eine, ein Lactam und/oder eine Aminosäure bildende Kohlenwasserstoffkette ist oder die Struktur

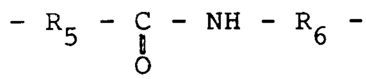

hat,

in der $R_5$ und $R_6$ jeweils die Kohlenwasserstoffreste einer zweibasischen Säure und eines Diamins bedeuten,

$R_4$ der Rest einer zweibasischen organischen Säure bedeutet,

p und q, gleich oder verschieden, von denen einer von beiden Null sein kann, eine Wiederholung einer Anzahl wiederkehrender die makromolekulare Kette der Dicarboxypolyamidsequenz bildende Einheiten bedeuten.

6. Polyetherthioether-esteramide nach Anspruch 5, dadurch gekennzeichnet, daß die Kohlenwasserstoffkette $R_3$ 4 bis 14 Kohlenstoffatome enthält.

7. Polyetherthioether-esteramide nach einem der Ansprüche 5 oder 6, dadurch gekennzeichnet, daß $R_4$ eine aliphatische, cycloaliphatische oder aromatische Gruppe ist.

8. Polyetherthioether-esteramide nach einem der Ansprüche 5 bis 7, dadurch gekennzeichnet, daß die mittlere Molekularmasse der Dicarboxypolyamidsequenz zwischen 300 und 15000 beträgt, wobei p + q zwischen 1 und 100 liegen.

9. Verfahren zur Herstellung von Polyetherthioetheresteramiden der Ansprüche 1 bis 8, bei dem man ein Dicarboxypolyamid, dessen Säuregruppen sich an den Enden der Kette befinden, mit einem Diol umsetzt, dadurch gekennzeichnet, daß das Diol ein Thioetherglycol oder Polyetherthioetherdiol der Formel:

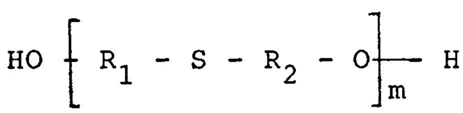

ist,

in der $R_1$, $R_2$ und m wie in Anspruch 1 oder 2 definiert sind.

10. Verfahren nach Anspruch 9, dadurch gekennzeichnet, daß man 99 bis 5 Gew.% des Dicarboxypolyamids mit 1 bis 95 Gew.% des Thioetherglycols oder des Polyetherthioetherdiols umsetzt.

11. Verfahren nach einem der Ansprüche 8 oder 9, dadurch gekennzeichnet, daß man die Reaktionspartner unter sorgfältiger Beachtung der Stöchiometrie zwischen den Carboxylgruppen des Polyamids und den Hydroxylgruppen des Thioetherglycols oder des Polyetherthioetherdiols umsetzt.

12. Verfahren nach einem der Ansprüche 9 bis 11, dadurch gekennzeichnet, daß die Polykondensation durch Mischen der Reaktionspartner im geschmolzenen Zustand in Gegenwart eines Katalysators erfolgt.

13. Verfahren nach einem der Ansprüche 9 bis 12, dadurch gekennzeichnet, daß der Katalysator die Formel $M(OQ)_4$ hat, in der:

M Titan, Zirkonium oder Hafnium und

Q einen geradkettigen oder verzweigten Alkylrest mit 1 bis 24 Kohlenstoffatomen bedeuten.

## Claims

1. Polyetherthioetheresteramides of formula:

$$\left[ \underset{\underset{O}{\|}}{C} - A - \underset{\underset{O}{\|}}{C} - O \left( R_1 - S - R_2 - O \right)_m \right]_n$$

in which:

A denotes a polyamide block

$R_1$ and $R_2$, which are identical or different, denote a linear or branched alkyl radical containing from 2 to 98 carbon atoms

m is between 1 and 50

n denotes a repetition of a number of repeat units forming the macromolecular chain.

2. Polyetherthioetheresteramides according to Claim 1, characterised in that $R_1$ and $R_2$ are denoted by the structure

$$- \underset{\underset{R_9}{|}}{\overset{\overset{R_7}{|}}{C}} - \underset{\underset{R_{10}}{|}}{\overset{\overset{R_8}{|}}{C}} -$$

in which $R_7$, $R_8$, $R_9$ and $R_{10}$, which are identical or different, denote H or an alkyl radical containing from 1 to 2-4 carbon atoms.

3. Polyetherthioetheresteramides according to either of Claims 1 and 2, characterised in that n is a number between 1 and 75.

4. Polyetherthioetheresteramides according to either of Claims 1 and 3, characterised in that the weight proportion of the group

$$- O \left( R_1 - S - R_2 - O \right)_m$$

represents 1 to 95 % of the total group

$$\left[ \underset{\underset{O}{\|}}{C} - A - \underset{\underset{O}{\|}}{C} - O \left( R_1 - S - R_2 - O \right) \right]_m$$

5. Polyetherthioetheresteramides according to one of Claims 1 to 4, characterised in that the dicarboxylic polyamide block

$$- \underset{\underset{O}{\|}}{C} - A - \underset{\underset{O}{\|}}{C} -$$

corresponds to the formula

$$\left[ \underset{\underset{O}{\|}}{C} - R_3 - NH \right]_p \underset{\underset{O}{\|}}{C} - R_4 - \underset{\underset{O}{\|}}{C} \left[ NH - R_3 - \underset{\underset{O}{\|}}{C} \right]_q$$

in which

$R_5$ may be either a hydrocarbon chain forming a lactam and/or an amino acid or the structure

$$- R_5 - \underset{\underset{O}{\|}}{C} - NH - R_6 -$$

in which $R_5$ and $R_6$ denote the hydrocarbon residues of a diacid and of a diamine respectively

$R_4$ denotes the residue of an organic diacid

p and q, which are identical or different, it being possible for one of them to be zero, denote a repetition of a number of repeat units forming the macromolecular chain of the dicarboxylic polyamide block.

6. Polyetherthioetheresteramides according to Claim 5, characterised in that the hydrocarbon chain $R_3$ contains from 4 to 14 carbon atoms.

7. Polyetherthioetheresteramides according to either of Claims 5 and 6, characterised in that $R_4$ is an aliphatic, cycloaliphatic or aromatic group.

8. Polyetherthioetheresteramides according to one of Claims 5 to 7, characterised in that the average molecular mass of the dicarboxylic polyamide block is between 300 and 15,000, p + q being between 1 and 100.

9. Process for the manufacture of the polyetherthioetheresteramides of Claims 1 to 8, consisting in reacting a dicarboxylic polyamide whose acidic functional groups are situated at the ends of the chain with a diol, characterised in that the diol is a thioether glycol or a polyetherthioetherdiol of formula:

$$HO-\left[R_1-S-R_2-O\right]_m-H$$

in which $R_1$, $R_2$ and m are as defined in Claim 1 or 2.

10. Process according to Claim 9, characterised in that 99 to 5 % by weight of dicarboxylic polyamide are reacted with 1 to 95 % of thioether glycol or of polyethertioetherdiol on a weight basis.

11. Process according to either of Claims 8 and 9, characterised in that the reactants are reacted while susbtantially conforming to the stoichiometry between the carboxylic groups of the polyamide and the hydroxyl groups of the thioether glycol or of the polyetherthiotherdiol.

12. Process according to one of Claims 9 to 11, characterised in that the polycondensation is carried out by mixing the reactants in the molten state in the presence of catalyst.

13. Process according to one of Claims 9 to 12, characterised in that the catalyst is of formula $M(OQ)_4$ in which:

M denotes titanium, zirconium or hafnium, and

Q is a linear or branched alkyl radical containing from 1 to 24 carbon atoms.